# EUROPEAN PATENT APPLICATION

(11) **EP 1 944 685 A2**
(43) Date of publication of application: **16.07.2008**
(21) Application number: 07123424.9
(22) Date of filing: 18.12.2007
(51) Int. Cl.: G06F 3/14

(54) **Display apparatus and control method thereof**

(30) Priority: 11.01.2007 KR 20070003510; 15.06.2007 KR 20070059116; 30.11.2007 KR 20070123853
(71) Applicant: Samsung Electronics Co., Ltd., Suwon-si, Gyeonggi-do 442-743 (KR)
(72) Inventor: Jun, Sung-gon, Suwon-si Gyeonggi-do (KR)
(74) Representative: D'Halleweyn, Nele Veerle Trees Gertrudis

(57) **Abstract**

A display apparatus, is provided, including an image processor which processes an image received from an external apparatus; a display unit which displays the image processed by the image processor; and a controller which, if an attribute of the image being displayed needs to be changed, provides the external apparatus display information on the attribute of the image to be changed.

## Description

### BACKGROUND OF THE INVENTION

### Field of the Invention

Apparatuses and methods consistent with the present invention relate to a display apparatus and a control method thereof, and more particularly, to a display apparatus which displays an image input from an external apparatus, and a control method thereof.

### Description of the Related Art

A display apparatus such as a monitor receives an image from an external apparatus such as a computer system, and displays the received image.

The displayed image has an attribute such as resolution. Typically, the display apparatus displays the image according to the attribute of the received image. In some cases, the attribute of the received image needs to be changed.

However, if the display apparatus changes the attribute the received image arbitrarily, for example, reduces the resolution of the received image, the information of the received image may be damaged and readability of the character may be lowered as well. Thus, the overall quality of the image deteriorates.

### SUMMARY OF THE INVENTION

Accordingly, it is an exemplary aspect of the present invention to provide a display apparatus which maintains the quality of an image received from an external apparatus even if the attribute of the image is changed, and a control method thereof.

Additional aspects and/or advantages of the present invention will be set forth in part in the description which follows and, in part, will be obvious from the description, or may be learned by practice of the present invention.

The foregoing and/or other aspects of the present invention may be achieved by providing a display apparatus, including: an image processor which processes an image received by an external apparatus; a display unit which displays the image processed by the image processor; and a controller which, if an attribute of the image being displayed needs to be changed, provides the external apparatus with display information on the attribute of the image to be changed.

According to an aspect of the invention, the display apparatus further includes a storage unit which stores the display information, wherein the controller changes the display information stored in the storage unit to reflect the attribute to be changed and informs the external apparatus that the display information has been changed.

According to an aspect of the invention, if the control signal is received from the display apparatus, the external apparatus generates an image based on the display information stored in the storage unit of the display apparatus.

According to an aspect of the invention, the display apparatus further includes a switch to connect or disconnect communication capabilities between the external apparatus and the storage unit, wherein the controller controls the switch to be opened to disconnect a communication link between the external apparatus and the storage unit while the display information stored in the storage unit is changed.

According to an aspect of the invention, the controller controls the switch to be closed to allow a communication link between the external apparatus and the storage unit after the change of the display information stored in the storage unit is completed.

According to an aspect of the invention, the storage unit communicates with the external apparatus through a second communication line branched from a first communication line, wherein the first communication line is between the controller and the external apparatus, and the switch is placed on the first communication line at a side of the external apparatus with respect to a branch point where the second communication line of the storage unit is branched from the first communication line between the controller and the external apparatus.

According to an aspect of the invention, the storage unit includes a write-protection pin to prohibit writing to the storage unit according to an input signal, and the controller controls the input signal to be input to the write-protection pin of the storage unit if the display information stored in the storage unit is not changed.

According to an aspect of the invention, when displaying a second image with the image at the same time, the controller determines that the attribute of the image needs to be changed.

According to an aspect of the invention, the display apparatus further includes a user input unit which receives a user command, wherein while displaying the image, the controller displays the image and the second image at the same time according to the user command.

According to an aspect of the invention, the attribute of the image includes a resolution of the image.

According to an aspect of the invention, the external apparatus includes a computer system which generates the image.

The foregoing and/or other aspects of the present invention may be achieved by providing a method of controlling a display apparatus which displays an image generated by an external apparatus, the image having an attribute, the method including: determining whether the attribute of the image being displayed needs to be changed; and if the attribute of the image needs to be changed, providing the external apparatus with display information on the attribute of the image to be changed.

According to an aspect of the invention, the method further includes changing the display information, the display information being stored in a memory, to reflect the attribute to be changed, and informing the external apparatus that the display information has been changed.

According to an aspect of the invention, the method further includes disconnecting a communication link between the external apparatus and the memory while the display information stored in the memory is changed.

According to an aspect of the invention, the method further includes resuming a communication link between the external apparatus and the memory after the change of the display information stored in the memory is completed.

According to an aspect of the invention, the external apparatus generates an image based on the stored display information if the control signal is received from the display apparatus.

According to an aspect of the invention, the method further includes displaying a second image with the image at the same time.

According to an aspect of the invention, the method further includes receiving a user command while displaying the image, and displaying the image and the second image at the same time according to the user's command.

According to an aspect of the invention, the attribute of the image includes a resolution of the image.

According to an aspect of the invention, the external apparatus includes a computer system which generates the image.

### BRIEF DESCRIPTION OF THE DRAWINGS

The above and/or other exemplary aspects of the present invention will become apparent and more readily appreciated from the following description of the exemplary embodiments, taken in conjunction with the accompanying drawings of which:
FIG. 1 is an example of a screen which is displayed by a display apparatus according to a first exemplary embodiment of the present invention;
FIG. 2 is a block diagram of the display apparatus according to the first exemplary embodiment of the present invention;
FIG. 3 illustrates a storage unit of the display apparatus according to the first exemplary embodiment of the present invention;
FIG. 4 is a flowchart which describes an operation of the display apparatus according to the first exemplary embodiment of the present invention;
FIG. 5 is a block diagram of a display apparatus according to a second exemplary embodiment of the present invention;
FIG. 6 is a flowchart which describes an operation of the display apparatus according to the second exemplary embodiment of the present invention; and
FIG. 7 is an example of a screen which is displayed by the display apparatus according to the first exemplary embodiment of the present invention.

### DETAILED DESCRIPTION OF THE EMBODIMENTS

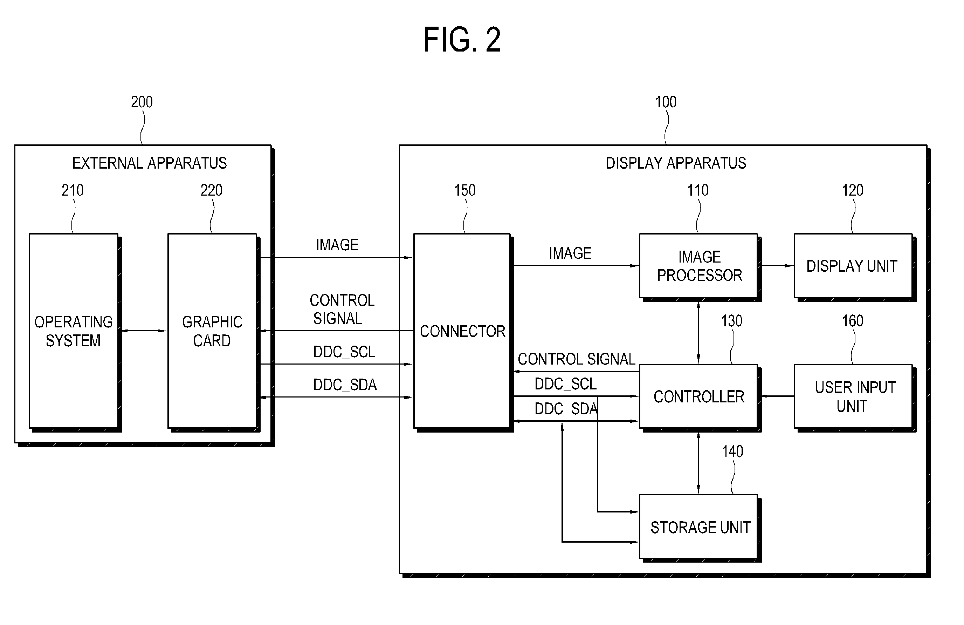

Hereinafter, exemplary embodiments of the present invention will be described with reference to accompanying drawings, wherein like numerals refer to like elements and repetitive descriptions will be avoided as necessary. FIG. 2 is a block diagram of a display apparatus 100 and an external apparatus 200 according to an exemplary embodiment of the present invention.

The display apparatus 100 may be embodied by a monitor or the like, and receives an image to be displayed from an external apparatus 200. The external apparatus 200 includes a computer system which generates the image.

The image generated by the external apparatus 200 has an attribute. The attribute of the image may include, for example, a resolution of the image.

When the attribute of the image received from the external apparatus 200 needs to be changed, the display apparatus 100 informs the external apparatus 200 that the attribute of the image should be changed, and provides the external apparatus 200 with display information on the attribute of the image to be changed. The external apparatus 200 changes the attribute of the image according to the display information on the attribute of the image to be changed. The display apparatus 100 receives the image, the attribute of which has been changed, from the external apparatus 200 and displays the image.

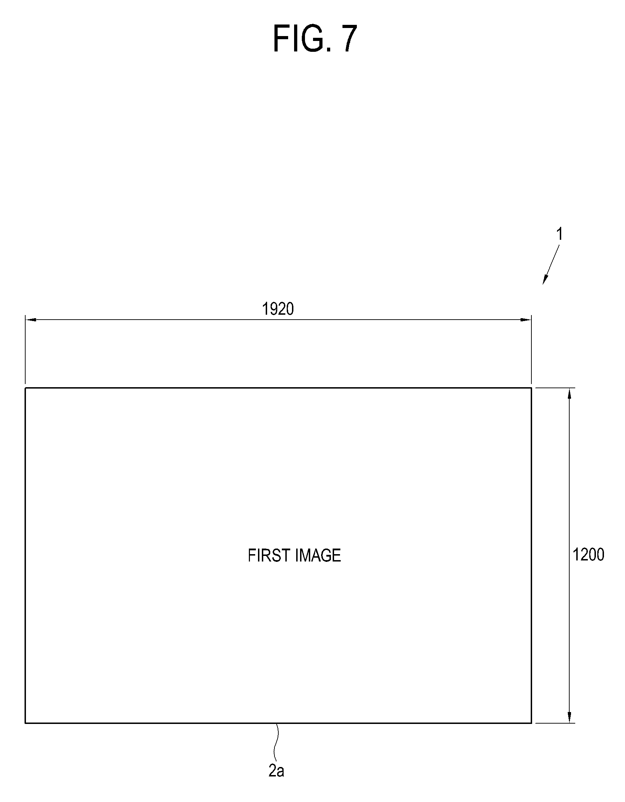

For example, referring to FIG. 7, the display apparatus 100 may display a first image 2a received from the external apparatus 200. The first image 2a may be displayed at the maximum resolution over the entire screen 1 of the display apparatus 100.

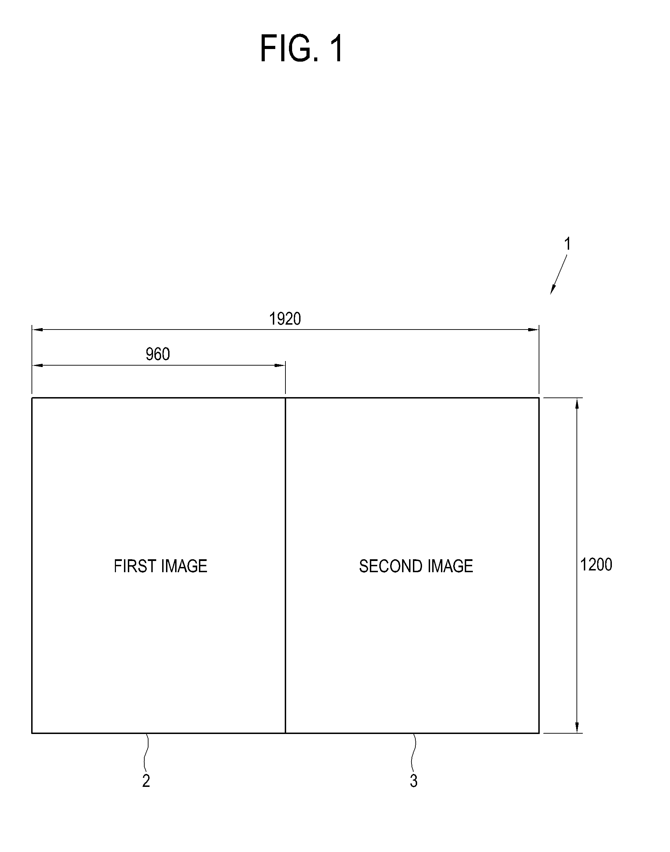

While displaying the first image 2a, the display apparatus 100 may try to display a second image with the first image 2a at the same time. The second image includes an image received from another external apparatus or a broadcasting station and an image generated by the display apparatus 100. The display apparatus 100 may display the first and second images 2 and 3 at the same time in the manner illustrated in FIG. 1. In this case, the attribute of the first image 2a needs to be changed, i.e., the resolution of the first image 2a needs to be reduced. In the present exemplary embodiment, the resolution of the first image 2 and 2a may be reduced from an originally received resolution of 1920×1200 to a resolution of 960×1200.

The display apparatus 100 informs that the resolution of the first image 2a needs to be reduced, and provides the external apparatus 200 with the display information on the resolution of the first image 2 to be reduced. The external apparatus 200 reduces the resolution of the first image 2a according to the display information on the resolution of the first image 2 to be reduced. The display apparatus 100 receives the first image 2, the resolution of which has been reduced, from the external apparatus 200 and displays the first image 2 with the second images 3 at the same time.

As described above, if the attribute of the image received from the external apparatus 200 needs to be changed, the display apparatus 100 controls the external apparatus 200 to change the attribute of the image in accordance with the display information on the attribute to be changed.

As shown in FIG. 2, the display apparatus 100 includes an image processor 110 which processes the image generated by the external apparatus 200, a display unit 120 which displays the image processed by the image processor 110, and a controller 130 which, when the attribute of the image needs to be changed, provides the external apparatus 200 with the display information on the attribute of the image to be changed.

The image processor 110 may perform predetermined image processing on the image to be displayed on the display unit 120.

The display unit 120 may include a liquid crystal display (LCD) or a plasma display panel (PDP) to display the image.

The display apparatus 100 may further include a storage unit 140 which stores the display information. The display information stored in the storage unit 140 may include extended display identification data (EDID) to inform the external apparatus 200 of characteristics of the display apparatus 100.

The external apparatus 200 may include an operating system 210 (such as Microsoft Windows) and a graphic card 220. The operating system 210 of the external apparatus 200 determines the characteristics of the display apparatus 100 when the display apparatus 100 is connected with the external apparatus 200. Such an operation performed by the operating system 210 of the external apparatus 200 is called plug and play.

The graphic card 220 of the external apparatus 200 reads the display information stored in the storage unit 140 of the display apparatus 100 when the display apparatus 100 is connected with the external apparatus 200.

The display apparatus 100 may further include a connector 150 which is connected with the graphic card 220 of the external apparatus 200 and transmits a signal thereto. The connector 150 may transmit the signal according to an interface standard such as a D-subminiature (D-sub) or a digital visual interface (DVI).

An I2C bus (refer to DDC_SCL and DDC_SDA in FIG. 2) may be provided to transmit the display information between the storage unit 140 and the graphic card 220 of the external apparatus 200. Display data channel version 2 (DDC 2) of Video Electronics Standards Association (VESA) defines transmission of EDID through the I2C bus DDC_SCL and DDC_SDA.

The storage unit 140 may include a programmable read-only memory (PROM) or an electrically erasable PROM (EEPROM). The storage unit 140 may be connected with the I2C bus DDC_SCL and DDC_SDA.

The operating system 210 and the graphic card 220 of the external apparatus 200 can alter an attribute of the image based on the display information received from the display apparatus 100.

For example, if the display information stored in the storage unit 140 includes 1920×1200 resolution of the display apparatus 100, the operating system 210 and the graphic card 220 of the external apparatus 200 can generate an image having a 1920x1200 resolution corresponding to the resolution of the display apparatus.

If the attribute of the image received from the external apparatus 200 needs to be changed, the controller 130 changes the display information stored in the storage unit 140 to reflect the attribute to be changed.

For example, if the resolution of the first image 2 and 2a needs to be changed from 1920×1200 to 960×1200 (refer to FIG. 1 and 7), the controller 130 changes resolution information among the display information stored in the storage unit 140 from 1920×1200 to 960×1200.

After changing the display information stored in the storage unit 140, the controller 130 transmits a control signal to the external apparatus 200 so that the external apparatus 200 can obtain the changed display information.

When receiving the control signal from the display apparatus 100, the external apparatus 200 reads the changed display information stored in the storage unit 140. Then, the external apparatus 200 changes the resolution of the image based on the changed display information. For example, the external apparatus 200 may change the resolution of the image from the original resolution of 1920×1200 to the changed resolution of 960×1200.

The display apparatus 100 may further include a user input unit 160 which receives a user's command to change the attribute of the image. For example, while displaying the first image 2a, the controller 130 may display the second image 3 with the first image 2 at the same time according to the user's command received by the user input unit 160. The user input unit 160 may include a control panel provided in the display apparatus 100 or a remote controller.

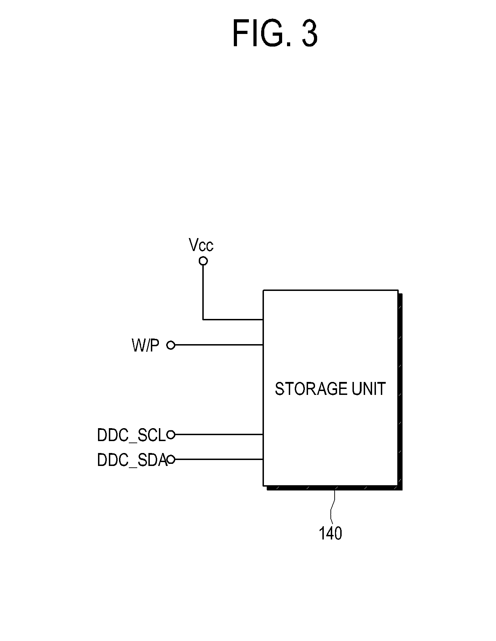

FIG. 3 illustrates a storage unit 140 of the display apparatus 100 according to an exemplary embodiment of the present invention. The storage unit 140 includes a power pin Vcc to supply a driving voltage, two DDC pins of DDC_SCL and DDC_SDA to be connected with the I2C bus, and a write-protection pin W/P. If a low signal is input to the write-protection pin W/P, the storage unit 140 is ready to be written. If a high signal is input to the write-protection pin W/P, the storage unit 140 is prohibited from being written.

If a change of display information stored in the storage unit 140 is required, the controller 130 controls a low signal to be input to the write-protection pin W/P. Conversely, the controller 130 controls a high signal to be input to the write-protection pin W/P in other cases, thereby preventing the display information stored in the storage unit 140 from being damaged.

The controller 130 may include a read only memory (ROM) (not shown) to store a computer program, a random access memory (RAM) (not shown) to load the computer program stored in the ROM, and a central processing unit (CPU) (not shown) which executes the computer program loaded to the RAM. In this case, the computer program may be programmed so that the CPU performs the foregoing operation of the controller 130.

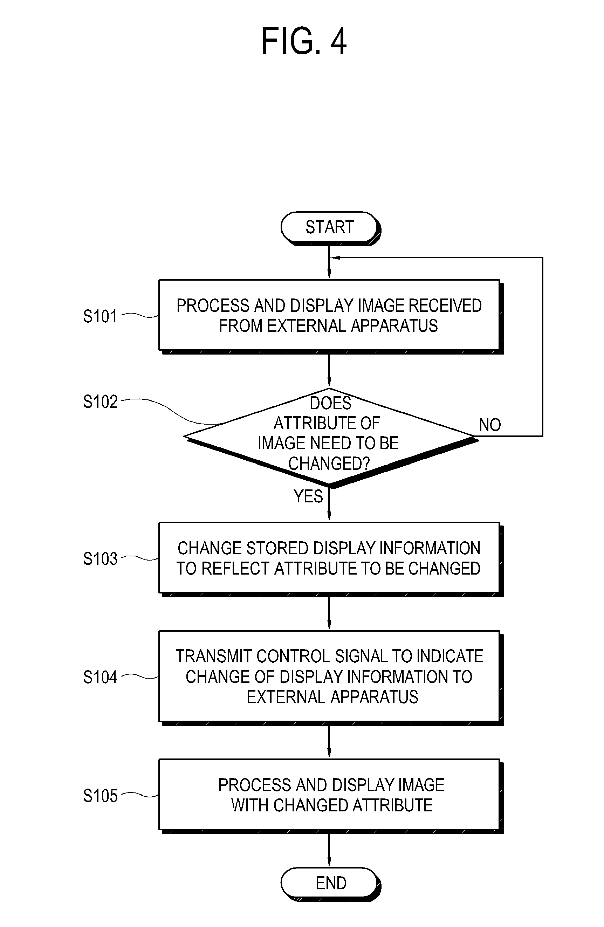

FIG. 4 is a flowchart which describes an operation of the display apparatus 100 according to an exemplary embodiment of the present invention. At operation S101, the controller 130 controls the image processor 110 to process an image received from the external apparatus 200 and to display the image.

At operation S102, the controller 130 determines whether an attribute of the image received from the external apparatus 200 needs to be changed. If it is determined at the operation of S102 that an attribute of the image does not need to be changed, the operation of S101 is repeated.

If it is determined at the operation of S102 that an attribute of the image needs to be changed, at operation S103 the controller 130 changes the display information stored in the storage unit 140 to reflect the attribute to be changed.

After changing the display information stored in the storage unit 140, at operation S104 the controller 130 transmits a control signal to indicate a change of the display information to the external apparatus 200. When receiving the control signal, the external apparatus 200 reads the display information stored in the storage unit 140 and changes the attribute of the image in accordance with the changed display information.

At operation S105, the controller 130 controls the image processor 110 to process the image received by the external apparatus 200 and whose attribute has been changed and to display the image.

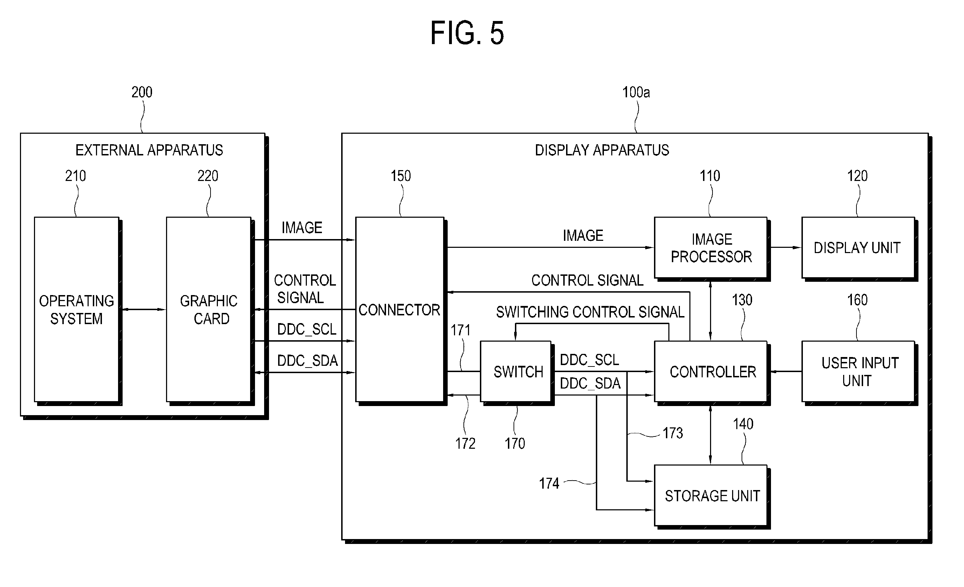

FIG. 5 is a block diagram of a display apparatus 100a according to a second exemplary embodiment of the present invention. Below, repetitive descriptions about the same or similar configurations as in the display apparatus 100 shown in FIG. 2 will be avoided as necessary.

In addition to the configuration of FIG. 2, the display apparatus 100a further includes a switch 170. The switch 170 is provided on a communication line (refer to '171' and '172' in FIG. 2) between the storage unit 140 and the external apparatus 200, and enables the storage unit 140 to be connected to or disconnected from the external apparatus 200. That is, the switch 170 controls whether or not the external apparatus 200 has access to the storage unit 140.

Communication between the storage unit 140 and the external apparatus 200 is performed through the I2C bus (refer to '171' and '172' in FIG. 2), and the switch 170 opens or closes an electrical circuit corresponding to at least one of the DDC_SCL line 171 and the DDC_SDA line 172.

Specifically, the storage unit 140 communicates with the external apparatus 200 through communication lines (refer to '173' and '174' in FIG. 2) branched from the communication lines (refer to '171' and '172' in FIG. 2) between the controller 130 and the externally apparatus 200. Further, the switch 170 is placed on the communication line at the side of the external apparatus 200 rather than the side of the controller with respect to the branch point where the communication lines 173 and 174 of the storage unit 140 are branched from the communication lines 171 and 172 between the controller 130 and the external apparatus 200. Accordingly, even if the switch 170 is opened and thus the storage unit 140 is disconnected from the external apparatus 200, the communication between the controller 130 and the storage unit 140 is maintained continuously.

The switch 170 is controlled by the controller 130. In other words, the switch 170 receives a switching control signal from the controller 130 and controls the storage unit 140 to be connected to or disconnected from the external apparatus 200 on the basis of the switching control signal. The switch 170 may be realized by, for example, a metal oxide semiconductor field effect transistor (MOSFET) or a chip including a device having the same or similar function as the MOSFET.

While accessing information stored in the storage unit 140, the controller 130 makes the switch 170 open to block communication between the external apparatus 200 and the storage unit 140. The controller 130 may access the display information stored in the storage unit 140 if the attribute of an image needs to be changed and there is a need to change the display information stored in the storage unit 140 to reflect the attribute to be changed.

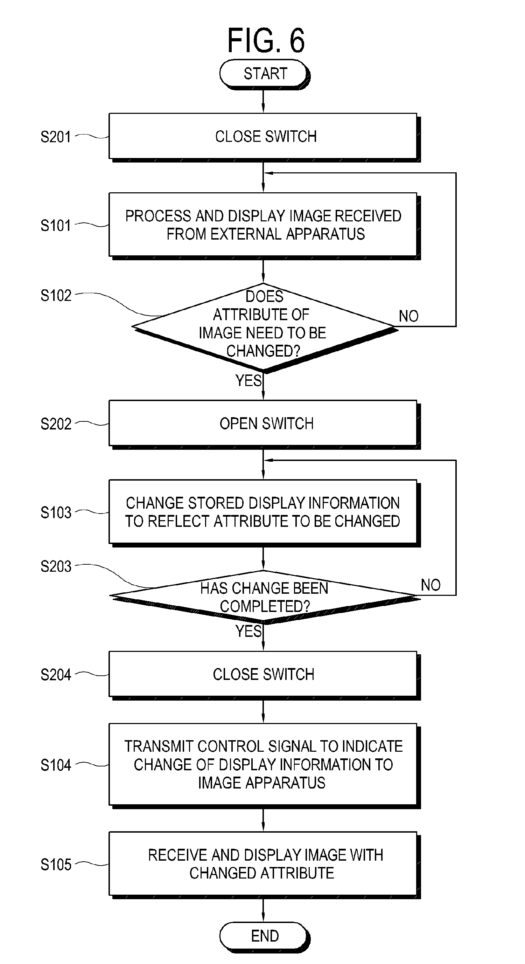

FIG. 6 is a flowchart which describes an operation of the display apparatus 100a according to the second exemplary embodiment of the present invention. Below, descriptions about the same or similar operation as in the display apparatus 100 shown in FIG. 4 will be avoided as necessary.

At operation S201, the controller 130 closes the switch 170 to enable the external apparatus 200 to access the storage unit 140.

At operation S101, the controller 130 controls the image processor 110 to process the image received from the external apparatus 200 and to display the image.

At operation S102, the controller 130 determines whether the attribute of the image received from the external apparatus 200 needs to be changed. If it is determined that the attribute of the image does not need to be changed, the operation of S101 is repeated.

If it is determined at the operation of S102 that the attribute of the image needs to be changed, at operation S202 the controller 130 opens the switch 170 so that the external apparatus 200 cannot access the storage unit 140.

At operation S103 the controller 130 changes the display information stored in the storage unit 140 to reflect the attribute to be changed while the switch 170 is open.

At operation S203, the controller 130 checks whether the change of the display information stored in the storage unit 140 has been completed. If the change has not been completed, the operation of S103 is repeated.

On the other hand, if the change has been completed, at operation S204 the controller 130 closes the switch 170 again and at operation S104 the controller 130 transmits a control signal to indicate a change of the display information to the external apparatus 200.

As the switch 170 has been closed at the operation of S104, the external apparatus 200 is allowed to access the storage unit 140 and read the changed display information from the storage unit 140. Accordingly, the external apparatus 200 changes the attribute of the image to reflect the changed display information.

At operation S105, the controller 130 receives the attribute-changed image from the external apparatus 200 and controls the received image to be displayed.

According to the present exemplary embodiment, the controller 130 and the external apparatus 200 communicate with the storage unit 140 by the I2C or the like as two masters communicating with one slave.

In this case, a communication collision may arise between the two masters. If a communication collision arises, it is difficult to secure stability because of data error, communication error or operation error such as latch-up.

To solve such problems, the controller 130 according to the present exemplary embodiment is configured to disconnect the external apparatus 200 from the storage unit 140 while the controller is accessing the storage unit 140, thereby preventing a communication collision between two masters and enhancing the stability. As described above, exemplary embodiments of the present invention provide a display apparatus which maintains the quality of an image input from an external apparatus, which may be lowered due to a change in an attribute of the image, and a control method thereof.

Further, exemplary embodiments of the present invention provide a display apparatus and a control method thereof, in which an external apparatus is prevented from accessing a memory when display information stored in the memory is changed for changing an attribute, thereby anticipating and preventing a communication collision between the display apparatus and the external apparatus and thus enhancing the stability of the display apparatus.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus, comprising:
an image processor which processes an image received from an external apparatus;
a display unit which displays the image processed by the image processor; and
a controller which, if an attribute of the image being displayed needs to be changed, provides the external apparatus with display information on the attribute of the image to be changed.

2. The display apparatus according to claim 1, further comprising a storage unit which stores the display information, wherein
the controller changes the display information stored in the storage unit to reflect the attribute to be changed and informs the external apparatus that the display information has been changed.

3. The display apparatus according to claim 2, further comprising a switch which connects and disconnects a communication link between the external apparatus and the storage unit,
wherein the controller controls the switch to be opened to disconnect the communication link between the external apparatus and the storage unit while the display information stored in the storage unit is changed.

4. The display apparatus according to claim 3, wherein the controller controls the switch to be closed to connect the communication link between the external apparatus and the storage unit after the change of the display information stored in the storage unit is completed.

5. The display apparatus according to claim 3, comprising a first communication line between the controller and the external apparatus and a second communication line, branched from the first communication line, which provides the communication link between the storage unit and the external apparatus.

6. The display apparatus according to claim 3, wherein the switch is disposed on the first communication line between a branch point, where the second communication line of the storage unit is branched from the first communication line, and the external apparatus.

7. The display apparatus according to claim 2, wherein the storage unit comprises a write-protection pin which prohibits writing to the storage unit according to an input signal.

8. The display apparatus according to claim 7, wherein the controller controls the input signal to be input to the write-protection pin of the storage unit if the display information stored in the storage unit is not changed.

9. The display apparatus according to claim 1, wherein when displaying a second image with the image at the same time, the controller determines that the attribute of the image needs to be changed.

10. The display apparatus according to claim 9, further comprising a user input unit which receives a user command,
wherein while displaying the image, the controller displays the image and the second image at the same time according to the user command.

11. The display apparatus according to claim 1, wherein the attribute of the image comprises resolution of the image.

12. The display apparatus according to claim 1, wherein the external apparatus comprises a computer system which generates the image.

13. A method of controlling a display apparatus which displays an image generated by an external apparatus, the image having an attribute, the method comprising:
determining whether the attribute of the image being displayed needs to be changed; and
if the attribute of the image needs to be changed, providing the external apparatus with display information on the attribute of the image to be changed.

14. The method according to claim 13, further comprising:
changing the display information, stored in a memory, to reflect the attribute to be changed, and
informing the external apparatus that the display information has been changed.

15. The method according to claim 14, further comprising disconnecting a communication link between the external apparatus and the memory while the display information stored in the memory is changed.

16. The method according to claim 15, further comprising reconnecting a communication link between the external apparatus and the memory after the change of the display information stored in the memory is completed.

17. The method according to claim 13, further comprising displaying a second image with the image at the same time.

18. The method according to claim 17, wherein the displaying further comprises:
receiving a user command while displaying the image, and
displaying the image and the second image at the same time according to the user command.

19. The method according to claim 13, wherein the attribute of the image comprises resolution of the image.

20. The method according to claim 13, wherein the external apparatus comprises a computer system which generates the image.
